# EUROPEAN PATENT SPECIFICATION

(11) **EP 3 438 896 B1**
(45) Date of publication and mention of the grant of the patent: **04.09.2024**
(21) Application number: 17184426.9
(22) Date of filing: 02.08.2017
(51) Int. Cl.: G06Q 10/06, G06Q 50/02

(54) **DEVICE FOR AGRICULTURAL MANAGEMENT**
VORRICHTUNG FÜR LANDWIRTSCHAFTLICHE VERWALTUNG
DISPOSITIF DE GESTION AGRICOLE

(43) Date of publication of application: 06.02.2019
(73) Proprietor: Bayer Business Services GmbH, 51061 Köln (DE)
(72) Inventor: Schäfer, Dirk, 50171 Kerpen (DE)
(74) Representative: BIP Patents

(56) References cited:
- WO-A1-2011/064445

## Description

### FIELD OF THE INVENTION

The present invention relates to a device for agricultural management and a method for agricultural management, as well as to a computer program element and a computer readable medium.

### BACKGROUND OF THE INVENTION

The general background of this invention is agricultural management. Increasingly sophisticated agricultural management systems are being provided to large scale agricultural enterprises, who operate sophisticated, sometimes automated, machinery within an integrated agricultural management system. However, a significant proportion of the food the world requires is produced by smallholders, who may have only one very small field, or a number of small fields, and who operate no, or little, mechanized machinery and for whom such sophisticated agricultural management systems are not appropriate.

For example WO2011/064445 discloses a method for automatically mapping agricultural resources via mobile devices which has several components, the first one of them being the determination of the boundary based GPS coordinates for determining the location information. Additional information is collected in that so called mapping process and an agricultural development plan is generated for that specific area. However the additional information collected is not used to improve location accuracy.

### SUMMARY OF THE INVENTION

It would be advantageous to provide agricultural management tools to aid such smallholders. The object of the present invention is solved with the subject matter of the independent claims, wherein further embodiments are incorporated in the dependent claims. It should be noted that the following described aspects and examples of the invention apply also for the device for agricultural management, the method for agricultural management, and for the computer program element and the computer readable medium.

According to a first aspect, there is provided a device for agricultural management, comprising:
- an input unit;
- a processing unit;
- a GPS unit; and
- an output unit.

The input unit is configured to provide the processing unit with agricultural data. The processing unit is configured to determine at least one geographical location of an agricultural land area. The determination comprises utilisation of the GPS unit. The processing unit is configured also to determine agricultural management data, and the determination comprises utilisation of the at least one geographical location and the agricultural data. The output unit is configured to output agricultural management information to a user of the device on the basis of the agricultural management data.

In this way, a farmer who may not necessarily know exactly where his farm or a field in that farm is located, is able to be provided with agricultural advice that is tailored to his location. In other words, a device such as a smartphone can use its GPS unit to determine a location of the smartphone. From that location, agricultural advice and/or information can be provided to the farmer via the screen of the smartphone.

In an example, determination of the at least one geographical location of the agricultural land area comprises at least one movement of the GPS unit. In this manner, a farmer can move a device in order to determine the location of his field.

In an example, the at least one movement comprises the device being moved around at least one boundary of the agricultural land area. In other words, the farmer can delineate a field through positioning the device at a boundary of the field. In an example, the at least one movement comprises the device being moved around all of the boundaries of the agricultural land area. In this manner, a farmer can walk or otherwise move around the border of his field. Therefore, not only can agricultural advice/information be provided to the farmer that accounts for his location the advice/information can account for the size of the field.

In an example, the device comprises a camera. The camera is configured to acquire at least one image of at least one part of the agricultural land area, The determination of the at least one geographical location of the agricultural land area can then comprise utilisation of the at least one image.

Thus acquired imagery can be used to augment GPS provided data. In this way, the geographical location can be better determined through for example processing of landmarks in the imagery. In an example, the at least one image comprises at least one image of at least boundary of the agricultural land area.

In other words, imagery of a boundary can be used to better locate a field, including determining its boundaries. This can involve utilisation of satellite imagery. In an example, the at least one image comprises images of all of the boundaries of the agricultural land area.

In other words, a farmer can walk or otherwise move around the borders of his field, and image processing can augment the GPS data to better determine not only the location of the field but its boundary. Thus, the spatial size of imagery can be used to determine the size of features at the field boundary from which the extent of the boundary can be determined. In an example, the device has an inertial sensor configured to measure movement, and this information is used with the imagery to determine the outer boundary of the field and augment the GPS data to determine that boundary.

Utilisation of imagery to augment GPS derived data can be especially important for very small fields that may only be 10m wide or 20m wide, and where absolute GPS errors could lead to significant errors in the determined field boundary.

In an example, the device comprises a transmitter. The processing unit is configured to utilize the transmitter to transmit information comprising the at least one geographical location of the agricultural land area. The device also comprises a receiver. The agricultural data can then comprise specific agricultural data relating to the agricultural land area that has been received by the receiver.

In this manner, the geographical information, such as the absolute location of the field and its boundary can be sent to a remote server for example. Then specific agricultural advice can be sent to the farmer for that location. In an example, the transmitted information comprises information input by the user. In other words the specific agricultural advice provided to the user, for that geographical location that can include the exact boundary of the field can take into account information such as the crop being grown by the user, when it was sown, the agricultural treatments such as herbicides and insecticides used by the farmer, how and when, when the field was watered, information on pests and diseases can also be acquired by the farmer that could be in written or image form and all or some of this information transmitted in order that the farmer receives bespoke agricultural advice that relates to what he or she is doing.

In an example, the agricultural data comprises information input by the user.

According to a second aspect, there is provided a method for agricultural management, comprising:
a) determining by a processing unit of a device at least one geographical location of an agricultural land area, the determination comprising utilisation of a GPS unit of the device;
c) providing agricultural data from an input unit of the device to the processing unit;
d) determining by the processing unit agricultural management data, the determination comprising utilisation of the at least one geographical location and the agricultural data; and
e) outputting by an output unit of the device agricultural management information to a user of the device on the basis of the agricultural management data.

In an example, step a) comprises moving the GPS unit.

In an example, the device comprises a transmitter and a receiver and wherein the method comprises step b) utilizing the processing unit to transmit via the transmitter information comprising the at least one geographical location of the agricultural land area, and wherein in step c) the agricultural data provided to the processing unit comprises specific agricultural data relating to the agricultural land area that has been received by the receiver.

According to another aspect, there is provided a computer program element for controlling an apparatus according to the apparatus of the first aspect, which when executed by a processor is configured to carry out the method of the second aspect.

According to another aspect, there is provided a computer readable medium having stored the program element. Advantageously, the benefits provided by any of the above aspects equally apply to all of the other aspects and vice versa. The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for agricultural management;
Fig. 2 shows a method for agricultural management; and
Fig. 3 shows a schematic set up of an example of the device for agricultural management being operated by a user.

### DETAILED DESCRIPTION OF EMBODIMENTS

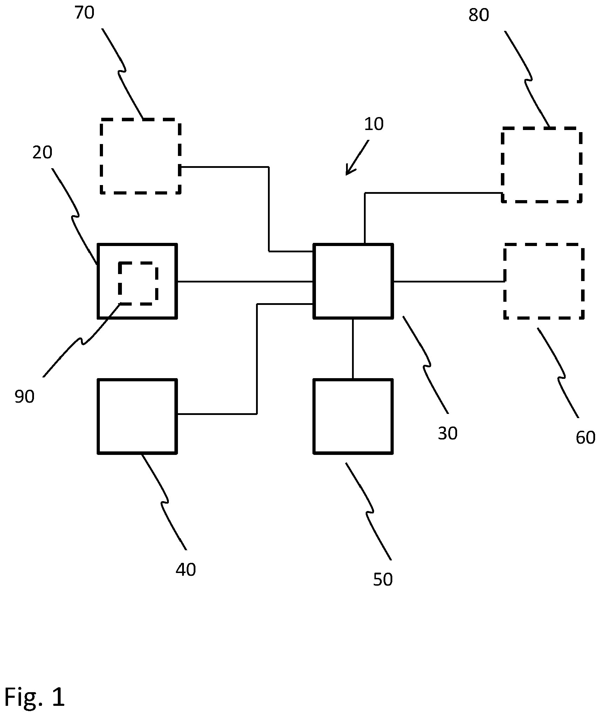

Fig. 1 shows an example of a device 10 for agricultural management. The device 10 comprises an input unit 20, a processing unit 30, a GPS unit 40 and an output unit 50. The input unit 20 is configured to provide the processing unit 30 with agricultural data. The processing unit 30 is configured to determine at least one geographical location of an agricultural land area. The determination comprises utilisation of the GPS unit 40. The processing unit 30 is configured also to determine agricultural management data. The determination of the agricultural management data comprises utilisation of the at least one geographical location and the agricultural data. The output unit 50 is configured to output agricultural management information to a user of the device on the basis of the agricultural management data.

In an example, the device is configured to receive satellite imagery of the landscape. In this way, a GPS determined location can also be correlated to satellite imagery in order to determine the extent and boundaries of the farmer's field from field boundaries observed in the satellite imagery. In an example, the processing unit is configured to use imagery processing, such as edge detection filters to determine the field boundaries.

Advice to the farmer can relate to information such as, what crop to grow, how to grow a crop, what herbicide, insecticide or fertilizer to use, when and for what reason, whether there is no need to use a herbicide, insecticide or fertilizer and why they are not needed, when to water the crop, when to sow to the crop and when to harvest the drop. The information provided to the farmer can relate to what disease is affecting the crop, what pest is affecting the crop and how to remedy the situation through for example application of a herbicide or insecticide and when and how it should be applied. The information provided can relate to what price could be expected for a crop, where it could be sold in the local neighbourhood, and how the price for that crop is changing.

According to an example, determination of the at least one geographical location of the agricultural land area comprises at least one movement of the GPS unit. According to an example, the at least one movement comprises the device being moved around at least one boundary of the agricultural land area. According to an example, the at least one movement comprises the device being moved around all of the boundaries of the agricultural land area.

According to an example, the device comprises a camera 60. The camera 60 is configured to acquire at least one image of at least one part of the agricultural land area. Determination of the at least one geographical location of the agricultural land area in this example can then comprise utilisation of the at least one image.

In an example, the device is configured to receive satellite imagery of the landscape, and the processing unit is configured use the satellite imagery and the at least one image acquired by the camera of the device in determining the at least one geographical location. In other words, features that are in the acquired image can be compared and/or mapped onto satellite imagery in order to augment the GPS information to determine the at least one geographical location.

In this way, a GPS determined location can also be correlated to satellite imagery in order to determine the extent and boundaries of the farmer's field from field boundaries observed in the satellite imagery. In an example, the processing unit is configured to use imagery processing, such as edge detection filters to determine the field boundaries. In an example, from a general GPS determined location satellite imagery can be interrogated to provide the farmer with a number of bounded fields, any one or more of could be their field or fields. These for example could be colour coded. These images of fields are then presented to the farmer, for example on the screen of a smart phone. The farmer, looking at these fields located as they are within satellite imagery, will immediately, from geographical contextual information, such as his field has a big tree in the corner or is next to a stream or is next to the triangular field, for example, be able to indicate which of these fields is his field. This can be done by touching the screen at the position of his or her field. The potential fields can be presented in different colours to the farmer, making it easier to see the different fields in terms of structure and in the context of the surrounding geographical information.

According to an example, the at least one image comprises at least one image of at least boundary of the agricultural land area. According to an example, the at least one image comprises images of all of the boundaries of the agricultural land area. According to an example, the device comprises a transmitter 70. The processing unit is configured then to utilize the transmitter to transmit information comprising the at least one geographical location of the agricultural land area. The device in this example also comprises a receiver 80. The agricultural data that is provided to the processing unit then comprises specific agricultural data relating to the agricultural land area that has been received by the receiver. According to an example, the transmitted information comprises information input by the user. According to an example, the agricultural data comprises information input by the user. In an example, the at least one input unit comprises a user input interface 90.

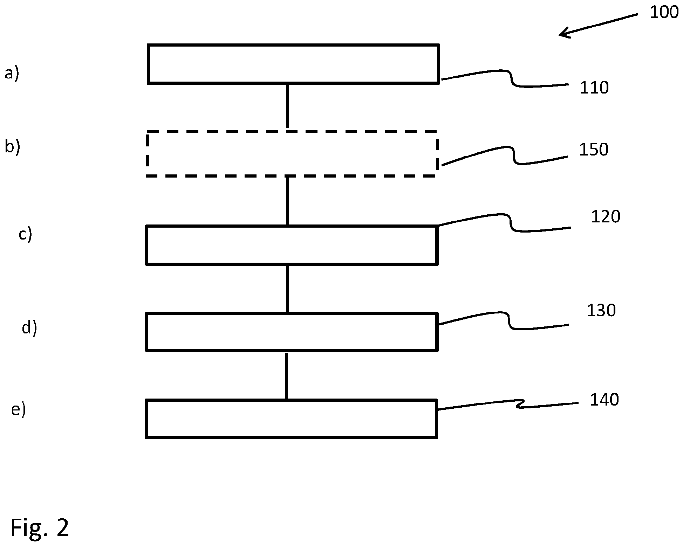

Fig. 2 shows a method 100 for agricultural management in its basic steps. The method 100 comprises:
in a determining step 110, also referred to as step a), determining by a processing unit 30 of a device 10 at least one geographical location of an agricultural land area, the determination comprising utilisation of a GPS unit 40 of the device;
in a providing step 120, also referred to as step c), providing agricultural data from an input unit 20 of the device to the processing unit;
in a determining step 130, also referred to as step d), determining by the processing unit agricultural management data, the determination comprising utilisation of the at least one geographical location and the agricultural data; and
in an outputting step 140, also referred to as step e), outputting by an output unit of the device agricultural management information to a user of the device on the basis of the agricultural management data.

According to an example, step a) comprises moving the GPS unit. In an example, moving the GPS unit comprises moving the device around at least one boundary of the agricultural land area. In an example, moving the device comprises moving the device around all of the boundaries of the agricultural land area.

In an example, the device comprises a camera, wherein the camera is configured to acquire at least one image of at least one part of the agricultural land area, and wherein determination of the at least one geographical location of the agricultural land area comprises utilisation of the at least one image. In an example, the at least one image comprises at least one image of at least boundary of the agricultural land area. In an example, the at least one image comprises images of all of the boundaries of the agricultural land area.

According to an example, the device comprises a transmitter and a receiver. The method can then comprise step b) utilizing 150 the processing unit to transmit via the transmitter information comprising the at least one geographical location of the agricultural land area. In this example, in step c) the agricultural data provided to the processing unit then comprises specific agricultural data relating to the agricultural land area that has been received by the receiver.

In an example, the transmitted information comprises information input by the user. In an example, the agricultural data comprises information input by the user. In an example, the input unit comprises a user input interface.

In an example, the output unit comprises a display configured to represent the agricultural management information.

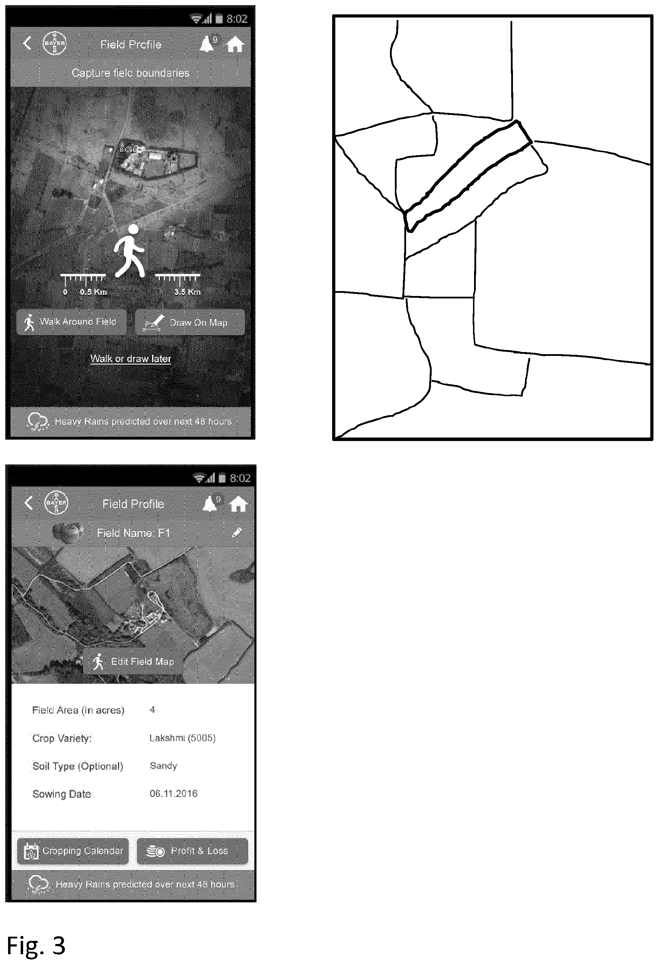

Fig. 3 shows an example of how a user uses the device. The user has an App on their smart phone. When asked to define where their field is to be found, the user is actually not sure. She lives in a rural community, has a very small field, and grows different seasonal crops that she sells at a local market. She grows her crops using the knowledge she has gained from successes and failures, and from knowledge gained from her neighbours. She however believes that she can do better, and is operating a device as described herein, that in this example is the smartphone operating an APP (application). Returning to her problem, as to where her field is to be located, the device requests that she walk around the boundary of her field. The device also asks that on her route around the field boundary she can take images of the boundary, but that this is not necessary. Having done this, she indicates that she has finished.

At this point, the mobile phone accesses a remote server via normal telecommunication transmissions, and information is downloaded to the smart phone. This information indicates what crops would be best to grow in that field. Knowing the size of the field, the farmer is provided with information regarding how much seed for example is required. Thus the remote server, from the general location of the user can provide information regarding the type of crop that could be grown and the seed sowing rate per unit area. A processor in the smartphone, from knowledge regarding the size of the field can then provide the farmer with information regarding the actual amount of seed required for her field. The farmer however can indicate the specific crop that she is growing, and can provide information via a keyboard and or take images regarding other information such as images of weeds, diseases and pests, and images of the crop itself. This information is again transmitted to the remote server, and the information provided back to the farmer indicates information such as what herbicides or pesticides/insecticides to use and how and when to use them as well as the quantities required. The information also specifies when to water the crop and when to harvest it.

Rather than use a remote server, if the smartphone has sufficient memory the database of information held on the remote server and the processing that is done to locate the field, and determine weeds/pests etc resides on the smartphone itself. In this case, information need not be sent to the remote server, but the farmer can be provided with the agricultural information even in remote locations with no telephonic coverage.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention. Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention. It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for agricultural management, comprising:
an input unit (20);
a processing unit (30);
a GPS unit (40); and
an output unit (50);
wherein, the input unit is configured to provide the processing unit with agricultural data;
wherein, the processing unit is configured to determine at least one geographical location of an agricultural land area, the determination comprising utilisation of the GPS unit by at least one movement of the GPS unit;
wherein, the processing unit is configured to determine agricultural management data, the determination comprising utilisation of the at least one geographical location and the agricultural data;
wherein, the output unit is configured to output agricultural management information to a user of the device on the basis of the agricultural management data;
wherein the at least movement of the GPS unit comprises the device is being moved around at least one boundary of the agricultural land area; **characterized in that**
the device is configured to receive satellite imagery of the landscape;
wherein the device comprises a camera (60), wherein the camera is configured to acquire at least one image of at least one part of the agricultural land area, and wherein determination of the at least one geographical location of the agricultural land area comprises utilisation of the at least one image comprising at least one image of the at least one boundary of the agricultural land area; and
wherein the processing unit is configured to use the satellite imagery and the at least one image acquired by the camera of the device in determining the at least one geographical location.

2. Device according to claim 1, wherein the at least one movement comprises the device being moved around all of the boundaries of the agricultural land area.

3. Device according to claim 1 or 2, wherein the at least one image comprises images of all of the boundaries of the agricultural land area.

4. Device according to any of claims 1-3, wherein the device comprises a transmitter (70) and wherein the processing unit is configured to utilize the transmitter to transmit information comprising the at least one geographical location of the agricultural land area, and wherein the device comprises a receiver (80), and wherein the agricultural data comprises specific agricultural data relating to the agricultural land area that has been received by the receiver.

5. Device according to claim 4, wherein the transmitted information comprises information input by the user.

6. Device according to any of claims 1-9, wherein the agricultural data comprises information input by the user.

7. A method (100) for agricultural management, comprising:
a) determining (110) by a processing unit of a device at least one geographical location of an agricultural land area, the determination comprising utilisation of a GPS unit by at least one movement of the GPS unit;
c) providing (120) agricultural data from an input unit of the device to the processing unit;
d) determining (130) by the processing unit agricultural management data, the determination comprising utilisation of the at least one geographical location and the agricultural data; and
e) outputting (140) by an output unit of the device agricultural management information to a user of the device on the basis of the agricultural management data;
f) moving the GPS unit comprising the device around at least one boundary of the agricultural land area;
g) configuring the device to receive satellite imagery of the landscape;
h) configuring the camera comprised in the device to acquire at least one image of at least one part of the agricultural land area,
i) determining of the at least one geographical location of the agricultural land area by utilization of the at least one image comprising at least one image of the at least one boundary of the agricultural land area; and
j) configuring the processing unit to use the satellite imagery and the at least one image acquired by the camera of the device in determining the at least one geographical location.

8. Method according to claim 7, wherein the device comprises a transmitter and a receiver and wherein the method comprises step c) utilizing (150) the processing unit to transmit via the transmitter information comprising the at least one geographical location of the agricultural land area, and wherein in step d) the agricultural data provided to the processing unit comprises specific agricultural data relating to the agricultural land area that has been received by the receiver.

9. A computer program element for controlling a device according to any of claims 1 to 8, which when executed by a processor is configured to carry out the method of claim 7.

10. A computer readable medium having stored the program element of claim 9.

## Patentansprüche

1. Vorrichtung (10) für landwirtschaftliches Management, die Folgendes umfasst:
eine Eingabeeinheit (20);
eine Verarbeitungseinheit (30);
eine GPS-Einheit (40); und
eine Ausgabeeinheit (50);
wobei die Eingabeeinheit konfiguriert ist, der Verarbeitungseinheit landwirtschaftliche Daten bereitzustellen;
wobei die Verarbeitungseinheit konfiguriert ist, mindestens einen geographischen Ort einer landwirtschaftlich genutzten Fläche zu bestimmen, wobei die Bestimmung die Verwendung der GPS-Einheit durch mindestens eine Bewegung der GPS-Einheit umfasst:
wobei die Verarbeitungseinheit konfiguriert ist, Daten für landwirtschaftliches Management zu bestimmen, wobei die Bestimmung die Verwendung des mindestens einen geographischen Orts und der landwirtschaftlichen Daten umfasst;
wobei die Ausgabeeinheit konfiguriert ist, auf der Grundlage der Daten für landwirtschaftliches Management Informationen für landwirtschaftliches Management an einen Anwender der Vorrichtung auszugeben;
wobei die mindestens eine Bewegung der GPS-Einheit umfasst, dass die Vorrichtung um mindestens eine Grenze der landwirtschaftlich genutzten Fläche bewegt wird;
**dadurch gekennzeichnet, dass**
die Vorrichtung konfiguriert ist, Satellitenbilder der Landschaft zu empfangen;
wobei die Vorrichtung eine Kamera (60) umfasst, wobei die Kamera konfiguriert ist, mindestens ein Bild von mindestens einem Teil der landwirtschaftlich genutzten Fläche zu erfassen, und wobei die Bestimmung des mindestens einen geographischen Orts der landwirtschaftlich genutzten Fläche die Verwendung des mindestens einen Bilds umfasst, das mindestens ein Bild der mindestens einen Grenze des landwirtschaftlich genutzten Bereichs umfasst; und
wobei die Verarbeitungseinheit konfiguriert ist, die Satellitenbilder und das mindestens eine Bild, das von der Kamera der Vorrichtung bei der Bestimmung des mindestens einen geographischen Orts erfasst worden ist, zu verwenden.

2. Vorrichtung nach Anspruch 1, wobei die mindestens eine Bewegung umfasst, dass die Vorrichtung um alle Grenzen der landwirtschaftlich genutzten Fläche bewegt wird.

3. Vorrichtung nach Anspruch 1 oder 2, wobei das mindestens eine Bild Bilder aller Grenzen der landwirtschaftlich genutzten Fläche umfasst.

4. Vorrichtung nach einem der Ansprüche 1-3, wobei die Vorrichtung eine Sendevorrichtung (70) umfasst und wobei die Verarbeitungseinheit konfiguriert ist, die Sendevorrichtung zu verwenden, um Informationen, die den mindestens einen geographischen Ort der landwirtschaftlich genutzten Fläche umfassen, zu senden, und wobei die Vorrichtung eine Empfangsvorrichtung (80) umfasst und wobei die landwirtschaftlichen Daten spezifische landwirtschaftliche Daten umfassen, die sich auf die landwirtschaftlich genutzte Fläche beziehen, die von der Empfangsvorrichtung empfangen worden sind.

5. Vorrichtung nach Anspruch 4, wobei die gesendeten Informationen Informationen umfassen, die vom Anwender eingegeben worden sind.

6. Vorrichtung nach einem der Ansprüche 1-9, wobei die landwirtschaftlichen Daten Informationen umfassen, die von dem Anwender eingegeben worden sind.

7. Verfahren (100) für landwirtschaftliches Management, das Folgendes umfasst:
a) Bestimmen (110) mindestens eines geographischen Ortes einer landwirtschaftlich genutzten Fläche durch eine Verarbeitungseinheit einer Vorrichtung, wobei die Bestimmung die Verwendung einer GPS-Einheit durch mindestens eine Bewegung der GPS-Einheit umfasst;
c) Bereitstellen (120) von landwirtschaftlichen Daten für die Verarbeitungseinheit von einer Eingabeeinheit der Vorrichtung;
d) Bestimmen (130) von Daten für landwirtschaftliches Management durch die Verarbeitungseinheit, wobei die Bestimmung die Verwendung des mindestens einen geographischen Orts und der landwirtschaftlichen Daten umfasst; und
e) Ausgeben (140) der Informationen für landwirtschaftliches Management an einen Anwender der Vorrichtung durch eine Ausgabeeinheit der Vorrichtung auf der Grundlage der Daten für landwirtschaftliches Management;
f) Bewegen der GPS-Einheit, die die Vorrichtung umfasst, um die mindestens eine Grenze der landwirtschaftlich genutzten Fläche;
g) Konfigurieren der Vorrichtung, um Satellitenbilder der Landschaft zu empfangen;
h) Konfigurieren der Kamera, die in der Vorrichtung enthalten ist, um mindestens ein Bild des mindestens einen Teils der landwirtschaftlich genutzten Fläche zu erfassen,
i) Bestimmen des mindestens einen geographischen Orts der landwirtschaftlich genutzten Fläche durch Verwendung des mindestens einen Bildes, das mindestens ein Bild der mindestens einen Grenze der landwirtschaftlich genutzten Fläche umfasst; und
j) Konfigurieren der Verarbeitungseinheit, um die Satellitenbilder und das mindestens eine Bild, das durch die Kamera der Vorrichtung erfasst worden ist, beim Bestimmen des mindestens einen geographischen Orts zu verwenden.

8. Verfahren nach Anspruch 7, wobei die Vorrichtung eine Sendevorrichtung und eine Empfangsvorrichtung umfasst und wobei das Verfahren den Schritt c) des Verwendens (150) der Verarbeitungseinheit, um über die Sendevorrichtung Informationen, die den mindestens einen geographischen Ort der landwirtschaftlich genutzten Fläche umfassen, zu versenden, umfasst und wobei in Schritt d) die landwirtschaftlichen Daten, die der Verarbeitungseinheit bereitgestellt worden sind, spezifische landwirtschaftliche Daten bezüglich der landwirtschaftlich genutzten Fläche, die von der Empfangsvorrichtung empfangen worden sind, umfassen.

9. Computerprogrammelement zum Steuern einer Vorrichtung nach einem der Ansprüche 1 bis 8, das konfiguriert ist, dann, wenn es durch einen Prozessor ausgeführt wird, das Verfahren nach Anspruch 7 durchzuführen.

10. Computerlesbares Medium, auf dem das Programmelement nach Anspruch 9 gespeichert ist.

## Revendications

1. Dispositif (10) de gestion agricole, comprenant :
une unité d'entrée (20) ;
une unité de traitement (30) ;
une unité GPS (40) ; et
une unité de sortie (50) ;
l'unité d'entrée étant configurée pour fournir des données agricoles à l'unité de traitement ;
l'unité de traitement étant configurée pour déterminer au moins une localisation géographique d'une surface de terres agricoles, la détermination comprenant l'utilisation de l'unité GPS par au moins un déplacement de l'unité GPS ;
l'unité de traitement étant configurée pour déterminer des données de gestion agricole, la détermination comprenant l'utilisation de l'au moins une localisation géographique et des données agricoles ;
l'unité de sortie étant configurée pour fournir en sortie des informations de gestion agricole à un utilisateur du dispositif sur la base des données de gestion agricole ;
l'au moins un déplacement de l'unité GPS comprenant le déplacement du dispositif autour d'au moins une limite de la surface de terres agricoles ; **caractérisé en ce que** le dispositif est configuré pour recevoir une imagerie satellitaire du paysage ;
le dispositif comprenant une caméra (60), la caméra étant configurée pour acquérir au moins une image d'au moins une partie de la surface de terres agricoles, et la détermination de l'au moins une localisation géographique de la surface de terres agricoles comprenant l'utilisation de l'au moins une image comprenant au moins une image de l'au moins une limite de la surface de terres agricoles ; et
l'unité de traitement étant configurée pour utiliser l'imagerie satellitaire et l'au moins une image acquise par la caméra du dispositif dans la détermination de l'au moins une localisation géographique.

2. Dispositif selon la revendication 1, l'au moins un déplacement comprenant le déplacement du dispositif autour de toutes les limites de la surface de terres agricoles.

3. Dispositif selon la revendication 1 ou 2, l'au moins une image comprenant des images de toutes les limites de la surface de terres agricoles.

4. Dispositif selon l'une quelconque des revendications 1 à 3, le dispositif comprenant un émetteur (70) et l'unité de traitement étant configurée pour utiliser l'émetteur pour transmettre des informations comprenant l'au moins une localisation géographique de la surface de terres agricoles, et le dispositif comprenant un récepteur (80), et les données agricoles comprenant des données agricoles spécifiques relatives à la surface de terres agricoles qui ont été reçues par le récepteur.

5. Dispositif selon la revendication 4, les informations transmises comprenant des informations entrées par l'utilisateur.

6. Dispositif selon l'une quelconque des revendications 1 à 9, les données agricoles comprenant des informations entrées par l'utilisateur.

7. Procédé (100) de gestion agricole, comprenant les étapes suivantes :
a) détermination (110), par une unité de traitement d'un dispositif, d'au moins une localisation géographique d'une surface de terres agricoles, la détermination comprenant l'utilisation d'une unité GPS par au moins un déplacement de l'unité GPS ;
c) fourniture (120) de données agricoles depuis une unité d'entrée du dispositif à l'unité de traitement ;
d) détermination (130), par l'unité de traitement, de données de gestion agricole, la détermination comprenant l'utilisation de l'au moins une localisation géographique et des données agricoles ; et
e) fourniture en sortie (140), par une unité de sortie du dispositif, d'informations de gestion agricole à un utilisateur du dispositif sur la base des données de gestion agricole ;
f) déplacement de l'unité GPS comprenant le dispositif autour d'au moins une limite de la surface de terres agricoles ;
g) configuration du dispositif pour qu'il reçoive une imagerie satellitaire du paysage ;
h) configuration de la caméra comprise dans le dispositif pour qu'elle acquière au moins une image d'au moins une partie de la surface de terres agricoles,
i) détermination de l'au moins une localisation géographique de la surface de terres agricoles par utilisation de l'au moins une image comprenant au moins une image de l'au moins une limite de la surface de terres agricoles ; et
j) configuration de l'unité de traitement pour qu'elle utilise l'imagerie satellitaire et l'au moins une image acquise par la caméra du dispositif dans la détermination de l'au moins une localisation géographique.

8. Procédé selon la revendication 7, le dispositif comprenant un émetteur et un récepteur et le procédé comprenant l'étape c) utilisation (150) de l'unité de traitement pour transmettre, via l'émetteur, des informations comprenant l'au moins une localisation géographique de la surface de terres agricoles et, à l'étape d), les données agricoles fournies à l'unité de traitement comprenant des données agricoles spécifiques relatives à la surface de terres agricoles qui ont été reçues par le récepteur.

9. Élément de programme d'ordinateur pour commander un dispositif selon l'une quelconque des revendications 1 à 8 qui, lorsqu'il est exécuté par un processeur, est configuré pour mettre en œuvre le procédé de la revendication 7.

10. Support lisible par ordinateur sur lequel est stocké l'élément de programme de la revendication 9.
